# EUROPÄISCHE PATENTANMELDUNG

(11) **EP 4 851 741 A2**
(43) Veröffentlichungstag der Anmeldung: **09.12.2026**
(21) Anmeldenummer: 26203989.4
(22) Anmeldetag: 16.10.2025
(51) Int. Cl.: G05B 23/02

(54) **LERN-BASIERTES TRAINIEREN UND AUTOMATISIERTES ÜBERFÜHREN VON BETRIEBSZUSTÄNDEN EINES PRODUKTIONSPROZESSES**

(30) Priorität: 18.11.2024 LU 508949
(62) Dokumentnummer(n) der früheren Anmeldung(en) nach Art. 76 EPÜ: 25209169.9 / 4 745 696
(71) Anmelder: Siemens Aktiengesellschaft, 80333 München (DE)
(72) Erfinder: Caspari, Adrian, 76187 Karlsruhe (DE); Bierweiler, Thomas, 76187 Karlsruhe (DE); Kempf, Sven, 76187 Karlsruhe (DE); Labisch, Daniel, 76187 Karlsruhe (DE); Rölle, Markus, 76187 Karlsruhe (DE); Sachs, Andreas, 76187 Karlsruhe (DE)
(74) Vertreter: Siemens Patent Attorneys

(57) **Zusammenfassung**

Es werden eine computer-implementierte Vorrichtung zum Trainieren eines ersten neuronalen Netzes zum Erkennen eines Betriebszustands eines industriellen Produktionsprozesses, ein computerlesbares Speichermedium mit einem entsprechend trainierten ersten neuronalen Netz sowie ein computer-implementiertes Verfahren zum Betreiben eines industriellen Produktionsprozesses beschrieben. Die Vorrichtung umfasst eine Definitionseinheit zum Definieren zumindest eines Betriebszustands, eine Bestimmungseinheit zum Bestimmen zumindest eines Zeitintervalls, in welchem sich der Produktionsprozess in dem zu erkennenden Betriebszustand befindet, eine Bereitstellungseinheit zum Bereitstellen einer ersten Zuordnung von Prozessdaten zu dem zu erkennenden Betriebszustand sowie eine Trainingseinheit zum Trainieren des ersten neuronalen Netzes, welches zumindest ein Anomalieerkennungsmodell umfasst. Bei dem Verfahren wird ein gegenwärtiger Betriebszustand zumindest teilweise basierend auf dem ersten trainierten neuronalen Netz bestimmt, zumindest ein potentiell folgender nächster Betriebszustand aus einer vorbestimmten Auswahl bestimmt und ein Übergang zu diesem automatisch und Algorithmus-basiert initiiert und ausgeführt.

## Beschreibung

Die vorliegende Erfindung betrifft ein Computer-implementiertes Verfahren, eine Computer-implementierte Vorrichtung, ein System sowie ein Computerprogrammprodukt zum Bestimmen eines Betriebszustands eines industriellen Produktionsprozesses sowie ein entsprechendes Trainingsverfahren für ein neuronales Netz.

Moderne industrielle Produktionsprozesse stellen meist eine komplexe Abfolge von Einzelschritten dar, deren genaues Überwachen im Zeitverlauf als bedeutend angesehen werden kann, um einen optimierten Fertigungsablauf ermöglichen zu können. Insbesondere kann es als bedeutend angesehen werden, einen konkreten Betriebszustand (d.h. einen Zustand, welcher den Fertigungsprozess in seiner Gesamtheit während eines Ablaufs beschreiben kann) zu bestimmen und zu charakterisieren.

Industrielle Produktionsprozesse können eine Abfolge von physikalischen und/oder chemischen Reaktionen umfassen. Diese sich so ergebende Abfolge der physikalischen und/oder chemischen Reaktionen kann schließlich einen Betriebszustand definieren, welcher sich dynamisch verändern kann.

Häufig verwendete Verfahren zum Bestimmen eines gegenwärtigen Betriebszustands ermöglichen meist kein effizientes und/oder kein ausreichend zuverlässiges Bestimmen eines entsprechenden Betriebszustands, so dass eine ausreichende Charakterisierung bzw. ein ausreichendes Überwachen eines Produktionsprozesses im Zeitverlauf nicht unter allen Umständen sichergestellt werden kann.

Ohne die Möglichkeit eines zuverlässigen und genauen Beschreibens eines Betriebszustands, stellt sich für einen Produktionsprozess das Problem des unzureichenden Bestimmens, ob ein gewünschter Zielzustand bereits erreicht wurde, was entsprechend zu potentiellen Verzögerungen, Fehlern und einer suboptimalen Performance führen kann. Auch wenn ein Bestimmen eines Betriebszustands manuell, durch eine (Bediener-) Handlung eines Bedieners möglich erscheint, so beschränkt diese Notwendigkeit einer manuellen (Bediener-) Handlung dennoch die zu erzielende Produktivität und erhöht das Risiko menschlicher Fehler.

Eine weitere Unsicherheit kann sich z.B. dann ergeben, wenn sich ein Produktionsprozess in einem Betriebszustand befindet, welcher keinem bereits bekannten Betriebszustand zugeordnet werden kann. In einem derartigen Fall ist es meist nicht möglich, ein ausreichend genaues Bestimmen eines Betriebszustands sicherzustellen.

Die Problematik des Bestimmens von Betriebszuständen, wurde bisher meist dadurch gelöst, indem eine (deterministische) Sequenz-basierte Abarbeitung von Betriebszuständen angenommen wurde. In einem derartigen Fall folgt der Produktionsprozess einer Annahme von vordefinierten Sequenzen (z.B. Betriebszuständen), wobei ein Endzustand basierend auf einem Feststellen bestimmt wird, dass bestimmte (Ausführungs-)Schritte abgeschlossen wurden. Somit war es z.B. möglich, dass die Abarbeitung eines Produktionsprozesses z.B. mit einem vordefinierten Zustand begonnen wurde und von dort über vordefinierte Abarbeitungsreihenfolgen in andere Zustände überführt wurde. Jedoch unterliegt auch diese Vorgehensweise dem Nachteil, ein genaues Bestimmen eines gegenwärtigen Betriebszustands zu ermöglichen, da lediglich auf vordefinierte Sequenzen zurückgegriffen wird, ohne ein Echtzeit-Feedback zu berücksichtigen. Dies vernachlässigt insbesondere auch eine Omnipräsenz von Störungen im Bereich der Prozessautomatisierung.

Alternativ wurde auch Bestrebungen nachgegangen, bei denen ein Bestimmen von Betriebszuständen basierend auf fest vordefinierten Definitionen (engl.: *hardcoded*) erfolgte, z.B. im Sinne fest definierter Bereiche für spezifische Parameter. Während ein derartiges Vorgehen zwar eine Zustandslevelidentifikation (engl.: *level of state*) ermöglicht, so ist sie dennoch durch ihre Inflexibilität und Unfähigkeit limitiert, sich an sich verändernde Prozessbedingungen anzupassen. VordefinierteDefinitionen können nicht alle möglichen Eventualitäten abdecken, was zu entsprechenden Fehlern und Ungenauigkeit in dem Bestimmen von Betriebszuständen führen kann.

Insbesondere im höherdimensionalen Raum kann die Festlegung von Einzelwerten eines Vektors problematisch sein. In einem derartigen Szenario sind meist die Verhältnisse/Korrelationen zueinander relevant. In einigen Fällen lassen sich diese als zusätzliche Dimensionen im Zustandsraum berechnen bzw. abbilden und damit in deren Dimension reduzieren.

Diese existierenden Lösungen haben sich insgesamt jedoch als unzureichend und zu ungenau herausgestellt, um Betriebszustände basierend auf Prozessdaten zu bestimmen und im Zeitverlauf zu verfolgen. Die Limitierungen von Sequenz-basierten Abläufen und festvordefinierten Zustandsdefinitionen haben die Notwendigkeit für ein fortschrittlicheres und intelligentes System, das sich an dynamische Prozessbedingen anpassen kann, notwendig gemacht und erfordern ein Echtzeit-Feedback für präzise Zustandsdetektion und Prozessautomatisierung basierend auf zur Verfügung stehenden Prozessdaten.

In anderen Fällen kann es erforderlich sein, Kenntnis über eine mögliche Abfolge verschiedener Betriebszustände zu haben. Dies kann in einigen Fällen bereits daran scheitern, dass, wenn ein unbekannter Zustand identifiziert wird, keine weiteren Handlungsoptionen ermöglicht werden.

In einem derartigen Fall kann es erforderlich sein, auf die Erfahrung von Benutzern zurückzugreifen, um entsprechende Zustände zu bestimmen und durch deren Abfolge zu navigieren sowie einen Endzustand bzw. Zielzustand zu erreichen. Diesbezüglich können Bediener häufig auf prozedurale Bedienungsanleitungen oder Dokumentationen zurückgreifen, um einen zugrundeliegenden Prozessablauf verstehen zu können und unter zur Verfügung stehenden Folgezuständen auswählen zu können. Ein derartiges Vorgehen kann sich jedoch als zeitintensiv, fehleranfällig und ineffizient (vor allem in komplexen Systemen, mit einer Vielzahl von Zuständen und Übergängen) erweisen. Einige Automatisierungsmöglichkeiten können eine grundlegende Führung und Visualisierung der Prozesszustände ermöglichen aber scheitern oft an fehlender umfassender Unterstützung für ein Identifizieren der Prozesszustände (also einem Bestimmen grundsätzlich zur Verfügung stehender Prozesszustände) und dem Bestimmen eines nächstliegenden Zustands im Falle vorliegender undefinierter Zustände.

Die Industrienormen ISA-106 und ISA-88 können zur Definition einer zustandsbasierten Prozedur beitragen, da diese Richtlinien und best-practice-Lösungen zum Design und zur Implementierung zustandsbasierter Kontrollsysteme beitragen können.

Es sind Systeme bekannt, die zur Definition bzw. Charakterisierung für zustandsbasierte Verfahren ausgelegt sind, wie z.B. Distributed Control Systems (DCS). Ein DCS ist ein in der Prozessindustrie häufig verwendetes Automatisierungssystem, das so konfiguriert werden kann, dass es zustandsbasierte Steuerungsstrategien unterstützt. DCS-Plattformen bieten in der Regel Funktionen zur Überwachung von Prozesszuständen, zur Verwaltung von Übergängen und zur Ausführung von Steuerungsaktionen auf der Grundlage von Verfahrensanforderungen. Ferner können Batch-Steuerungssysteme in Betracht gezogen werden, wobei hierunter Chargensteuerungssysteme, die häufig auf dem ISA-88-Standard basieren, verstanden werden, und in Industrien eingesetzt werden, die Chargenproduktionsprozesse umfassen. Diese Systeme ermöglichen die Verwaltung und Steuerung komplexer Verfahren mit mehreren Zuständen und Übergängen. Während in der State Based Control ISA106 meist kontinuierliche Prozesse und mögliche Übergänge von einem quasi-statischen zu einem anderen quasistatischem Zustand im Fokus stehen, sind typische Chargenprozesse durch eine Vielzahl unterschiedlicher Zustände nach jedem einzelnen Prozessschritt gekennzeichnet. In einigen Fällen können Langzeitarchivierungssysteme (für Prozessdaten) bzw. Historians zum Einsatz kommen. Prozess-Historiker sind Datenverwaltungssysteme, die Prozessdaten sammeln und speichern. Sie können verwendet werden, um den zustandsbasierten Betrieb von Prozessen zu verfolgen und zu dokumentieren, um so (nachträglich) Einblicke in die historische Entwicklung und das Verhalten des Systems zu erhalten. In einigen Fällen können auch Advanced Process Control (APC) Systeme eingesetzt werden. APC-Systeme nutzen fortschrittliche Algorithmen und Modelle zur Optimierung der Prozessleistung und -steuerung. Diese Systeme können Strategien zur Prozessführung einbeziehen, um die Prozesseffizienz und -stabilität zu verbessern. Ferner kann es möglich sein, Manufacturing Execution Systeme (MES) zu implementieren. MES-Plattformen bieten Echtzeit-Transparenz und Kontrolle über die Fertigungsabläufe. Sie können zustandsbasierte Steuerungsfunktionen enthalten, um die Ausführung von Verfahren und Arbeitsabläufen zu verwalten und zu verfolgen.

Es besteht daher ein Bedarf, ein verbessertes Bestimmen eines Betriebszustands bereitzustellen.

In der WO 2023/032364 ist ein computer-implementiertes Verfahren zum Trainieren eines neuronalen Netzes zum Erkennen eines Betriebszustands eines industriellen Produktionsprozesses offenbart, wobei das neuronale Netz zumindest ein Anomalieerkennungsmodell umfasst.

Gemäß einem ersten Aspekt wird ein computer-implementiertes Verfahren zum Trainieren eines ersten neuronalen Netzes zum Erkennen eines Betriebszustands eines industriellen Produktionsprozesses vorgeschlagen. Das Verfahren umfasst ein Definieren des zumindest einen Betriebszustands, ein Bestimmen zumindest eines Zeitintervalls, in welchem sich der industrielle Produktionsprozess in dem zu erkennenden Betriebszustand befindet, ein Bereitstellen einer ersten Zuordnung von Prozessdaten, welche mit dem Produktionsprozess assoziiert sind, zu dem zu erkennenden Betriebszustand, welcher während des Zeitintervalls aktiv ist. Ferner kann das computer-implementierte Verfahren ein Trainieren, basierend auf der bereitgestellten ersten Zuordnung, eines ersten neuronalen Netzes, wobei das erste neuronale Netz zumindest ein Anomalieerkennungsmodell umfasst und wobei das neuronale Netz trainiert wird, basierend auf dem zumindest einen Anomalieerkennungsmodell eine Zuordnung von Prozessdaten, welche mit dem Produktionsprozess assoziiert sind, zu einem Betriebszustand, welcher zu einem bestimmten Zeitintervall aktiv ist, durchzuführen.

Der industrielle Produktionsprozess kann eine sukzessive Abfolge von Betriebszuständen umfassen. In einigen Fällen können die Betriebszustände, neben einer (vorbestimmten) sukzessiven Abfolge auch verzweigt (wobei die Verzweigungen z.B. konditionell aufgerufen werden) vorliegen.

Das Definieren eines Betriebszustands kann ein Festlegen von Werten für die Prozessdaten umfassen, so dass, wenn sich ein Satz von Prozesswerten, welche mit den Prozessdaten assoziiert sind, innerhalb eines Zielkorridors befindet, bestimmt werden kann, dass der industrielle Produktionsprozess einen bestimmten, mit den betreffenden Prozessdaten assoziierten Betriebszustand eingenommen hat.

Unter Prozessdaten können im vorliegenden Kontext alle Daten verstanden werden, welche während eines Durchlaufens eines Produktionsprozesses erfasst werden können. Hierbei kann es sich z.B. um Sensordaten handeln und/oder um berechnete (z.B. zumindest teilweise aus Sensordaten abgeleitete) Daten. Dies kann z.B. das Erfassen von Temperaturdaten, Druckdaten, Gewichtsdaten, Geschwindigkeitsdaten, Durchsatzdaten und/oder anderen geeigneten Daten umfassen. In einigen Fällen können auch Offline-Daten verwendet werden, welche z.B. Eigenschaften eingesetzter Vorprodukte kennzeichnen. In einigen Fällen können die Prozessdaten eine Spannung und/oder einen Strom umfassen.

Das Zeitintervall kann z.B. bis zu 10 Sekunden, bis zu 30 Sekunden, bis zu 1 Minute, bis zu 5 Minuten, bis zu 30 Minuten, bis zu 1 Stunde, bis zu 5 Stunden, bis zu 12 Stunden, bis zu 24 Stunden oder länger als 1 Tag gewählt werden. Das zumindest eine Zeitintervall kann mehr als ein Zeitintervall umfassen, wie z.B. zumindest zwei Zeitintervalle und kann derart bereitgestellt werden, dass dessen Länge stets konstant bleibt. In einigen Fällen kann sich die Länge des zumindest einen Zeitintervalls im Zeitverlauf verändern.

Auf diese Weise kann in effizienter Weise ein Trainingsverfahren für ein erstes neuronales Netz bereitgestellt werden, so dass mit dem trainierten ersten neuronalen Netz nachfolgend ein Bestimmen ermöglicht werden kann, ob bereitgestellte Prozessdaten grundsätzlich einem (vordefinierten bzw. bereits bekannten) Betriebszustand zugeordnet werden können. Dies kann ein verbessertes Überwachen eines industriellen Produktionsprozesses ermöglichen.

Insbesondere kann dies ein Bestimmen eines aktuellen Betriebszustands ermöglichen, ohne eine Vorgeschichte des gegenwärtigen Betriebszustands kennen bzw. berücksichtigen zu müssen. Dies kann insbesondere ein gezieltes und effizientes Springen zu einem Betriebszustand, z.B. als Teil einer sequentiellen Abfolge von Betriebszuständen sein.

Gemäß einer Ausführungsform kann der Betriebszustand mit der Herstellung eines bestimmten Produkts oder mit einem initialen Betriebszustand assoziiert sein.

Unter einem Betriebszustand kann vorliegend ein Ablaufschritt eines industriellen Produktionsprozesses verstanden werden. Ein Ablaufschritt kann sich durch eine konkrete Handlung auszeichnen oder durch ein Warten (d.h. durch einen Zeitabschnitt, in welchem keine konkrete mit einem Produktionsprozess assoziierte Handlung erfolgt). In anderen Worten, der Betriebszustand kann mit der Herstellung eines bestimmten Produkts assoziiert sein. In einem derartigen, beispielhaft genannten Fall kann sich der Produktionsprozess z.B. auf die Fertigung einer Substanz C beziehen. Die Fertigung kann z.B. die Betriebszustände "Bereitstellen einer ersten Ausgangssubstanz", "Bereitstellen einer zweiten Ausgangssubstanz" und "Vermischen der ersten Ausgangssubstanz mit der zweiten Ausgangssubstanz" umfassen, wodurch durch das Vermischen die Substanz C gebildet werden kann. Die jeweiligen Betriebszustände können durch konkrete Ausprägungen der Werte von Prozessdaten repräsentiert werden.

Unter einem initialen Betriebszustand kann derjenige Betriebszustand eines industriellen Produktionsprozesses verstanden werden, welcher als ein erster Betriebszustand angenommen wird, wenn der industrielle Produktionsprozess initial gestartet wird. In einigen Beispielen kann der initiale Betriebszustand eine Initialisierung des industriellen Produktionsprozesses umfassen. Die Initialisierung kann z.B. ein Einstellen der im Rahmen des industriellen Produktionsprozesses zu verwendenden Vorrichtungen auf einen vorbestimmten (initialen) Startwert umfassen (wie z.B. einen Füllstand, eine Temperatur, ein Druck, ein Durchfluss, etc.).

Dies kann zu einem deterministischen Abbilden des industriellen Produktionsprozesses beitragen und damit ein verbessertes Überwachen des Ablaufs eines industriellen Produktionsprozesses unterstützen.

Gemäß einer weiteren Ausführungsform kann das erste neuronale Netz für jeden zu erkennenden Betriebszustand jeweils ein Anomalieerkennungsmodell umfassen und jeder zu erkennende Betriebszustand jeweils einem Anomalieerkennungsmodell zugeordnet werden, welches den zu erkennenden Betriebszustand als anomaliefrei erkennt.

Unter einem Anomalieerkennungsmodell kann vorliegend ein auf zumindest einer künstlichen Intelligenz basierendes Modell verstanden werden (z.B. im Sinne zumindest eines neuronalen Netzes), welches dazu trainiert wurde, Abweichungen (d.h. Anomalien) von zumindest einem Soll-Zustand zu erkennen.

Auf diese Weise kann für eine Vielzahl von Betriebszuständen in effizienter und zuverlässiger Weise ein Erkennen eines Betriebszustands ermöglicht werden und somit in verbesserter Weise ein Überwachen eines industriellen Produktionsprozesses bereitgestellt werden.

Gemäß einer weiteren Ausführungsform kann das Trainieren ein Trainieren eines jeden Anomalieerkennungsmodells umfassen, so dass jedes Anomalieerkennungsmodell jeweils den ihm zugeordneten Betriebszustand als anomaliefrei erkennt und andere, von dem zugeordneten Betriebszustand verschiedene Betriebszustände als mit einer Anomalie behaftet erkennt.

Das Anomalieerkennungsmodell kann derart trainiert werden, dass dieses einen Betriebszustand als anomaliefrei erkennt, wenn der zu erkennende Betriebszustand dem Betriebszustand entspricht, für welchen das Anomalieerkennungsmodell trainiert wurde. In einem derartigen Fall kann der Betriebszustand, welcher durch das Anomalieerkennungsmodell erkannt werden soll, als ein Soll-Zustand für das Anomalieerkennungsmodell verstanden werden. Der zumindest eine Soll-Zustand kann basierend auf Gut-Daten trainiert worden sein, wobei die Gut-Daten Prozessdaten umfassen können, welche mit einem bestimmten Betriebszustand assoziiert sein können, welcher als aus Sicht des Anomalieerkennungsmodells als "gut" bzw. als "nicht anomal" charakterisiert werden soll.

Der Betriebszustand kann z.B. dann als anomaliefrei erkannt werden, wenn das zumindest eine Anomalieerkennungsmodell keine Abweichung der erfassten Prozessdaten von einer Zuordnung von Prozessdaten zum einem Betriebszustand feststellt, auf welche das Anomalieerkennungsmodell trainiert wurde. Wird hingegen eine Abweichung (z.B. als Ausreißer, neues, bislang nicht bekanntes Merkmal, etc.) gegenüber der Zuordnung von Prozessdaten zu einem Betriebszustand, mittels welcher das Anomalieerkennungsmodell trainiert wurde, festgestellt, so kann auf ein Vorliegen einer Anomalie geschlossen werden.

Auf diese Weise kann ein Trainingsverfahren bereitgestellt werden, welches zu einem verbesserten Bestimmen eines Vorliegens eines Betriebszustands benutzt werden kann.

Gemäß einer weiteren Ausführungsform kann das computer-implementierte Verfahren ferner ein Bereitstellen, an ein zweites neuronales Netz, welches einen Klassifikator umfasst, einer zweiten Zuordnung von Prozessdaten zu jeweils einem Betriebszustand umfassen, sowie ein Trainieren, basierend auf der bereitgestellten zweiten Zuordnung, des zweiten neuronalen Netzes, wobei das zweite neuronale Netz trainiert wird, Prozessdaten einem Betriebszustand zuzuordnen.

Die zweite Zuordnung von Prozessdaten kann derart bereitgestellt werden, dass die Prozessdaten mit, bevorzugt exklusiv, einem Betriebszustand assoziiert werden können.

Auf diese Weise kann das zweite neuronale Netz, neben dem Bestimmen, dass erfasste Prozessdaten grundsätzlich einem Betriebszustand zugeordnet werden können (z.B. basierend auf einem Bestimmen, dass keine Anomalie vorliegt), zusätzlich auch eine Zuordnung der Prozessdaten zu einem bestimmten Betriebszustand ermöglicht werden. Dies kann zu einer weiteren Verbesserung der Überwachung von zumindest einem Betriebszustand eines industriellen Produktionsprozesses beitragen.

Gemäß einem zweiten Aspekt wird ein computer-implementiertes Verfahren zum Bestimmen eines Betriebszustands eines industriellen Produktionsprozesses vorgeschlagen. Das computer-implementierte Verfahren umfasst ein Bereitstellen von Prozessdaten, welche mit dem Produktionsprozess assoziiert sind, an zumindest ein erstes trainiertes neuronales Netz, welches, wie hierin beschrieben, trainiert wurde, wobei das erste neuronale Netz zumindest ein Anomalieerkennungsmodell umfasst und die Prozessdaten an ein jedes des zumindest einen Anomalieerkennungsmodells bereitgestellt werden. Ferner umfasst das computer-implementierte Verfahren ein Bestimmen, zumindest teilweise basierend auf dem ersten trainierten neuronalen Netz, ob die Prozessdaten einem vordefinierten Betriebszustand zugeordnet werden können und ein Bereitstellen eines ersten Indikators, welcher indikativ dafür ist, ob die Prozessdaten einem Betriebszustand zugeordnet werden können.

Der erste Indikator kann als Zeichenkette, als Nachricht oder in anderer geeigneter Weise bereitgestellt werden.

Dies kann, basierend auf einem trainierten ersten neuronalen Netz, ein verbessertes Überwachen eines industriellen Produktionsprozesses ermöglichen, z.B. in dem ein deterministisches Bestimmen eines Ablaufs des industriellen Produktionsprozesses in effizienter Weise unterstützt wird.

Gemäß einer Ausführungsform umfasst das Bestimmen, ob die Prozessdaten einem der Betriebszustände zugeordnet werden können, ferner ein Bestimmen, dass die Prozessdaten keinem der Betriebszustände zugeordnet werden können, wenn jedes des zumindest einen Anomalieerkennungsmodells die Prozessdaten als mit einer Anomalie behaftet erkennt oder ein Bestimmen, dass die Prozessdaten einem der Betriebszustände zugeordnet werden können, wenn eines des zumindest einen Anomalieerkennungsmodells die Prozessdaten als anomaliefrei erkennt oder ein Bestimmen, dass die Prozessdaten keinem der Betriebszustände zugeordnet werden können, wenn mehr als ein Anomalieerkennungsmodell bereitgestellt wird und wenn zumindest zwei Anomalieerkennungsmodelle die Prozessdaten als anomaliefrei erkennen.

In einigen Beispielen kann ein Zustand, in welchem mehr als ein Anomalieerkennungsmodell bereitgestellt wird und zumindest zwei Anomalieerkennungsmodelle die Prozessdaten als anomaliefrei erkennen, lediglich temporär vorliegen. In einigen Beispielen kann ein derartiger Zustand als eine Aufforderung verstanden werden, ein Nachtrainieren von zumindest einem des mehr als einen Anomalieerkennungsmodells durchzuführen.

Das Bestimmen, dass jedes der Anomalieerkennungsmodelle die bereitgestellten Prozessdaten als mit einer Anomalie behaftet erkennt, kann darauf basieren, dass keines der Anomalieerkennungsmodelle auf das Erkennen eines Betriebszustands trainiert wurde, welcher mit den bereitgestellten Prozessdaten assoziiert werden kann. Folglich können die bereitgestellten Prozessdaten keinem Betriebszustand zugeordnet werden, auf welchen das erste neuronale Netz trainiert wurde.

Erkennt ein Anomalieerkennungsmodell die bereitgestellten Prozessdaten als anomaliefrei, so kann dies darauf basieren, dass das betreffende Anomalieerkennungsmodell auf das Erkennen des betreffenden Betriebszustands (basierend auf den bereitgestellten Prozessdaten) trainiert wurde. In einigen Beispielen erkennt lediglich ein einziges Anomalieerkennungsmodell die bereitgestellten Prozessdaten als zu einem Betriebszustand zugehörig.

In einigen Beispielen kann das Bestimmen, dass die bereitgestellten Prozessdaten mehr als einem Betriebszustand zugeordnet werden können darauf basieren, dass sich die bereitgestellten Prozessdaten mehreren Prozessdaten ähnlich sind, welche im Rahmen einer Zuordnung von Prozessdaten zu einem Betriebszustands, während des Training des ersten neuronalen Netzes, verwendet wurden.

Auf diese kann ein verbessertes, und auf Grund der Verwendung mehrerer Anomalieerkennungsmodelle, statistisches Bestimmen ermöglicht werden, ob bereitgestellte Prozessdaten einem Betriebszustand zugeordnet werden können, auf dessen Erkennung das erste neuronale Netz vorab trainiert wurde.

Gemäß einer weiteren Ausführungsform kann das computer-implementierte Verfahren ferner ein Bereitstellen der Prozessdaten, wenn die Prozessdaten einem Betriebszustand zugeordnet werden konnten, an ein zweites neuronales Netz, umfassend einen Klassifikator, welches wie hierin beschrieben trainiert wurde umfassen. Ferner kann das computer-implementierte Verfahren ein Bestimmen, durch das zweite neuronale Netz, einer Zuordnung der Prozessdaten zu einem Betriebszustand sowie ein Bereitstellen eines zweiten Indikators, welcher indikativ ist für die Zuordnung der Prozessdaten zu dem Betriebszustand, umfassen.

Das zweite neuronale Netz kann von dem ersten neuronalen Netz logisch bzw. strukturell verschieden sein (z.B. können das erste neuronale Netz und das zweite neuronale Netz jeweils eine unterschiedliche Tiefe aufweisen und/oder eine unterschiedliche Anzahl von Knoten pro Schicht).

Der zweite Indikator kann als Zeichenkette, als Nachricht oder in anderer geeigneter Weise bereitgestellt werden.

Auf diese Weise kann es ermöglicht werden, nicht nur ein Bestimmen zu ermöglichen, ob bereitgestellte Prozessdaten einem (vordefinierten) Betriebszustand zugeführt werden können, sondern auch ein nachfolgendes Bestimmen ermöglicht werden, in welchem Betriebszustand (von ggf. einer Vielzahl von Betriebszuständen) sich der industrielle Produktionsprozess zu einem bestimmten Zeitintervall befindet.

Gemäß einer weiteren Ausführungsform kann das Bestimmen ferner ein Bestimmen eines Betriebszustands umfassen, zumindest teilweise basierend auf einer Berechnung einer Metrik, welchem die Prozessdaten mit einer vorbestimmten Sicherheit zugeordnet werden können, wenn durch das Bereitstellen der Prozessdaten an das erste neuronale Netz und/oder an das zweite neuronale Netz keine eindeutige Zuordnung möglich ist.

Unter einer Metrik kann ein Maß verstanden werden, um den Abstand von Prozessdaten von ((zumindest einer) Klassifikationsgruppen zu bestimmen. In einigen Beispielen kann es möglich sein, eine metrische Distanz zwischen Prozessdaten und zumindest einer vordefinierten Klassifikationsgruppe zu bestimmen. In einigen Fällen kann es möglich sein, die erfassten Prozessdaten in einem zumindest zweidimensionalen Koordinatensystem aufzutragen, wobei sich Punktwolken aus den Prozessdaten bestimmen lassen. Die Metrik kann z.B. das Bestimmen einer metrischen Distanz zwischen Schwerpunkten der erhaltenen Punktwolken umfassen. Es wird darauf hingewiesen, dass der vorliegend beschriebene zweidimensionale Fall nur als exemplarisch zu verstehen ist und auch Szenarien in höheren Dimensionen oder eindimensional (d.h., allgemein n-dimensional) möglich sind.

Auf diese Weise kann ein quantitatives Bestimmen eines Betriebszustands ermöglicht werden.

Gemäß einer weiteren Ausführungsform kann das Bereitstellen des zweiten Indikators ferner ein Bereitstellen des zweiten Indikators, mittels einer Benutzerschnittstelle, an einen Benutzer umfassen, sowie ein Bestimmen, zumindest eines potentiell, auf den bestimmten Betriebszustand folgenden nächsten Betriebszustand, ein Bereitstellen des bestimmten zumindest einen potentiell folgenden nächsten Betriebszustand an den Benutzer, ein Entgegennehmen einer Benutzereingabe, mittels der Benutzerschnittstelle, welche indikativ dafür ist, dass ein Übergang zu dem folgenden nächsten Betriebszustand ausgeführt werden soll, sowie ein Ausführen des folgenden nächsten Betriebszustands basierend auf der entgegengenommenen Benutzereingabe.

In einigen Fällen kann die Benutzerschnittstelle als eine berührungsempfindliche Anzeige (z.B. ein Touchscreen Display) bereitgestellt werden. Zusätzlich oder alternativ kann die Benutzerschnittstelle ein akustisches Ausgabemittel (z.B. einen Lautsprecher) und/oder ein akustisches Eingabemittel (z.B. ein Mikrophon) umfassen. Die Benutzerschnittstelle kann konfiguriert eine bidirektionale Kommunikation mit einem Benutzer zu ermöglichen.

Das Entgegennehmen der Benutzereingabe kann z.B. durch eine Tastatur und/oder Maus erfolgen. Zusätzlich oder alternativ kann das Entgegennehmen der Benutzereingabe ein akustisches Entgegennehmen umfassen (z.B. basierend auf einer Spracheingabe) und/oder das Entgegennehmen der Benutzereingabe mittels der berührungsempfindlichen Anzeige.

In einigen Beispiel kann der potentiell nächste Betriebszustand als ein einzelner Vorschlag für einen potentiell nächsten Betriebszustand bereitgestellt werden. Alternativ kann es auch möglich sein, den potentiell nächsten Betriebszustand im Rahmen eines Angebots mehrerer potentiell nächster Betriebszustände bereitzustellen. Im letztgenannten Fall kann es möglich sein, dass das Entgegennehmen der Benutzereingabe die Auswahl des gewünschten nächsten Betriebszustands umfasst.

Dies kann eine Interaktion eines Benutzers mit dem computer-implementierten Verfahren ermöglichen und eine gezielte bzw. gewünschte Einflussnahem des Benutzers auf den industriellen Produktionsprozess ermöglichen. Letzteres kann einen auf situative Gegebenheiten zugeschnittenen industriellen Produktionsprozess ermöglichen.

Gemäß einer weiteren Ausführungsform kann das computer-implementierte Verfahren ein Analysieren von historisch ausgeführten Übergängen zwischen zwei aufeinanderfolgenden Betriebszuständen sowie ein Bestimmen, zumindest teilweise basierend auf dem Analysieren, einer Vorhersage eines zukünftig zu erwartenden Übergangs von dem bestimmten Betriebszustand zu einem potentiell folgenden nächsten Betriebszustand umfassen.

Das Analysieren kann ein Analysieren umfassen, welcher n-te Betriebszustand in der Vergangenheit (d.h. historisch) auf einen n-1-ten Betriebszustand folgte. Das Analysieren kann ein Bestimmen einer statistischen Auswertung umfassen, welche indikativ dafür ist, mit welcher (relativen) Häufigkeit in der Vergangenheit ein bestimmter n-ter Betriebszustand auf einen n-1-ten Betriebszustand folgte. Ein Medianwert, welcher über die betreffende (relative) Häufigkeit bestimmt wurde, kann indikativ dafür sein, welcher folgende nächste Betriebszustand auf einen gegenwärtigen Betriebszustand mit einer höchsten Wahrscheinlichkeit folgen könnte.

Auf diese Weise kann, basierend auf historischen Daten, eine Abfolge von Betriebszuständen eines Produktionsprozesses eines zukünftigen Produktionsprozesses implementiert werden. Dies kann eine verbesserte Vorhersage eines potentiell folgenden nächsten Betriebszustands ermöglichen.

Gemäß einem dritten Aspekt wird ein Computerprogrammprodukt vorgeschlagen, welches Befehle umfasst, die bei der Ausführung des Programms durch einen Computer diesen veranlassen, die Schritte eines computer-implementierten Verfahrens auszuführen, wie hierin beschrieben.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem vierten Aspekt wird eine computer-implementierte Vorrichtung zum Bestimmen eines Betriebszustands eines industriellen Produktionsprozesses vorgeschlagen. Die computer-implementierte Vorrichtung umfasst eine erste Bereitstellungseinheit zum Bereitstellen von Prozessdaten, welche mit dem Produktionsprozess assoziiert sind, an zumindest ein erstes trainiertes neuronales Netz, welches wie hierin beschrieben trainiert wurde, wobei das erste neuronale Netz zumindest ein Anomalieerkennungsmodell umfasst und die Prozessdaten an ein jedes des zumindest einen Anomalieerkennungsmodells bereitgestellt werden. Ferner umfasst die computer-implementierte Vorrichtung eine Bestimmungseinheit zum Bestimmen, zumindest teilweise basierend auf dem ersten trainierten neuronalen Netz, ob die Prozessdaten einem vordefinierten Betriebszustand zugeordnet werden können sowie eine zweite Bereitstellungseinheit zum Bereitstellen eines ersten Indikators, welcher indikativ dafür ist, ob die Prozessdaten einem Betriebszustand zugeordnet werden können.

Die jeweilige Einheit, zum Beispiel die erste Bereitstellungseinheit, die Bestimmungseinheit und/oder die zweite Bereitstellungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein

Unter einem neuronalen Netz kann ein computerbasiertes Modell des maschinellen Lernens verstanden werden. Es kann die Funktionsweise des menschlichen Gehirns nachahmen. Es kann z.B. aus miteinander verbundenen künstlichen Neuronen bestehen, die in mehreren Schichten angeordnet sind: einer Eingabeschicht, einer oder mehreren verborgenen Schichten und einer Ausgabeschicht. Jedes Neuron kann mit anderen Neuronen verknüpft und besitzt eine spezifische Gewichtung sowie einen Schwellenwert. Das neuronale Netz kann Eingabedaten verarbeiten, indem es diese durch die verschiedenen Schichten leitet, wobei jede Schicht die Daten analysiert und transformiert. Durch einen Trainingsprozess (z.B. wie hierin beschrieben) mit großen Datenmengen kann das Netz lernen, Muster zu erkennen und Aufgaben wie Klassifizierung, Vorhersage oder Entscheidungsfindung durchzuführen (wie hierin beschrieben). Die Fähigkeit des neuronalen Netzes, komplexe nichtlineare Beziehungen zwischen Eingabe- und Ausgabedaten zu modellieren, kann es ihm ermöglichen, Verallgemeinerungen vorzunehmen und auf neue, unbekannte Eingaben zu reagieren.

Gemäß einer Ausführungsform kann die computer-implementierte Vorrichtung ferner eine Ausführungseinheit zum Ausführen der Schritte des computer-implementierten Verfahrens wie hierin beschrieben umfassen und/oder eine weitere Ausführungseinheit zum Ausführen des Computerprogrammprodukts wie hierin beschrieben.

Die Ausführungseinheit und/oder die weitere Ausführungseinheit kann ein Field Programmable Gate Array (FPGA) und/oder eine central processing unit (CPU) und/oder eine andere geeignete Berechnungseinheit umfassen.

Gemäß einem fünften Aspekt wird ein System zum Bestimmen eines Betriebszustands eines industriellen Produktionsprozesses vorgeschlagen. Das System umfasst die computer-implementierte Vorrichtung wie hierin beschrieben und das Computerprogrammprodukt wie hierin beschrieben.

In einigen Beispielen kann eine computer-implementierte Vorrichtung zum Trainieren eines ersten neuronalen Netzes zum Erkennen eines Betriebszustands eines industriellen Produktionsprozesses bereitgestellt werden. Die Vorrichtung umfasst eine Definitionseinheit zum Definieren des zumindest einen Betriebszustands, eine Bestimmungseinheit zum Bestimmen zumindest eines Zeitintervalls, in welchem sich der industrielle Produktionsprozess in dem zu erkennenden Betriebszustand befindet, eine Bereitstellungseinheit zum Bereitstellen einer ersten Zuordnung von Prozessdaten, welche mit dem Produktionsprozess assoziiert sind, zu dem zu erkennenden Betriebszustand, welcher während des Zeitintervalls aktiv ist sowie eine Trainingseinheit zum Trainieren, basierend auf der bereitgestellten ersten Zuordnung, eines ersten neuronalen Netzes, wobei das erste neuronale Netz zumindest ein Anomalieerkennungsmodell umfasst und wobei das neuronale Netz trainiert wird, basierend auf dem zumindest einen Anomalieerkennungsmodell eine Zuordnung von Prozessdaten, welche mit dem Produktionsprozess assoziiert sind, zu einem Betriebszustand, welcher zu einem bestimmten Zeitintervall aktiv ist, durchzuführen.

Ferner kann ein trainiertes erstes und/oder ein trainiertes zweites neuronales Netz bereitgestellt werden, welches trainiert wurde wie hierin beschrieben.

Auch wenn die hierin beschriebenen Ausführungsformen in Isolation voneinander beschrieben wurden, so wird dennoch darauf hingewiesen, dass diese unabhängig davon auch beliebig miteinander kombiniert werden können.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein exemplarisches Verfahren zum Bestimmen eines Betriebszustands;
Fig. 2 zeigt ein Ablaufdiagramm eines exemplarischen computer-implementierten Verfahrens zum Trainieren eines ersten neuronalen Netzes;
Fig. 3 zeigt ein exemplarisches computer-implementiertes Verfahren zum Bestimmen eines Betriebszustands eines industriellen Produktionsprozesses;
Fig. 4 zeigt eine exemplarische computer-implementierte Vorrichtung zum Bestimmen eines Betriebszustands eines industriellen Produktionsprozesses; und
Fig. 5 zeigt ein exemplarisches System zum Bestimmen eines Betriebszustands eines industriellen Produktionsprozesses.

In den Figuren sind gleiche oder funktionsgleiche Elemente mit denselben Bezugszeichen versehen worden, sofern nichts anderes angegeben ist.

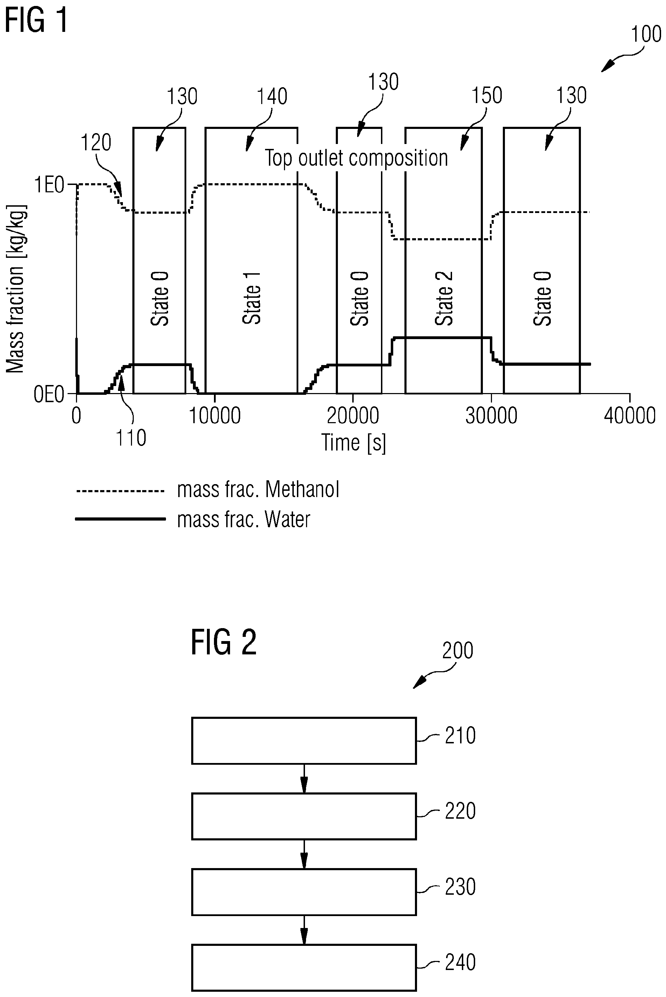

Fig. 1 zeigt ein Diagramm 100, welches ein exemplarisches Verfahren zum Bestimmen eines Betriebszustands eines industriellen Produktionsprozesses zeigt.

Diagramm 100 zeigt einen exemplarischen Massestrom für Wasser 110 sowie eine exemplarischen Massestrom für Methanol 120 (jeweils in kg/kg) wie dieser im Rahmen eines exemplarischen industriellen Produktionsprozesses zur Anwendung kommen kann.

Diese exemplarischen Masseströme können jeweils als Prozessdaten fungieren, um einen Betriebszustand eines industriellen Produktionsprozesses zu bestimmen.

Hierzu kann es möglich sein, konkrete Ausprägungen, wie z.B. Messdaten (Sensordaten) zu erfassen, welche dann als Prozessdaten fungieren können.

In einigen Fällen kann es möglich sein, die gewonnenen Messdaten mit Betriebszuständen zu assoziieren, indem ein Vorliegen konkreter Ausprägungen jeweiligen Betriebszuständen zugeordnet werden. Diese Betriebszustände, welche z.B. im Rahmen des hierin vorgestellten Verfahrens bestimmt werden sollen, können in einigen Fällen von einem Benutzer des computer-implementierten Verfahrens vorab definiert werden.

Eine derartige Vorabdefinition kann z.B. ein Definieren von zumindest einem Zeitintervall umfassen, während welchem konkrete Ausprägungen von Prozessdaten betrachtet werden sollen und ggf. mit einem vorabdefinierten Betriebszustand assoziiert werden sollen.

Nachfolgend kann ein erstes neuronales Netz darauf trainiert werden, zumindest einen Betriebszustand, basierend auf für ein Zeitintervall bereitgestellter Prozessdate zu erkennen (wie hierin beschrieben). Das erste neuronale Netz kann in einigen Fällen eine State Vector Machine (SVM) und/oder einen Isolation Forst (IF) umfassen, welche jeweils vorab trainiert wurden (wie hierin beschrieben).

In einem Beispiel kann z.B. ein Vorliegen einer ersten Ausprägung des Massestroms für Wasser 110 wie das Vorliegen einer Ausprägung (z.B. ein erster Messwert) des Massestroms für Methanol mit einem ersten Betriebszustand 130 assoziiert werden. In einigen Fällen kann ein erstes trainiertes neuronales Netz benutzt werden, um zu Bestimmen, ob die Konstellation der jeweils ersten Ausprägungen tatsächlich mit einem Betriebszustand assoziiert werden kann, d.h. ob ein entsprechender Betriebszustand vorab definiert wurde. Dies kann z.B. basierend auf dem IF erfolgen. Der IF kann z.B. benutzt werden, um undefinierte Betriebszustände bzw. Ausreißer bestimmen zu können. Mittels der SVM kann es ermöglicht werden, definierte Betriebszustände zu bestimmen.

Im Zeitverlauf kann sich die erste Ausprägung des Massestroms für Wasser 110 verändern und z.B. auf eine zweite Ausprägung des Massestroms für Wasser 110 abnehmen.

Gleichzeitig (d.h. während eines gleichen (Benutzer-definierten) Zeitintervalls) kann auch die erste Ausprägung des Massestroms für Methanol 120 von der ersten Ausprägung hin zu einer zweiten Ausprägung zunehmen. Das Vorliegen dieser Konstellation der zweiten Ausprägung des Massestroms für Wasser 110 sowie der zweiten Ausprägung des Massestroms für Methanol 120 kann mit einem Vorliegen eines zweiten Betriebszustand 140 assoziiert werden.

Im weiteren Zeitverlauf kann der Massestroms für Wasser 110 z.B. von der zweiten Ausprägung zu der ersten Ausprägung hin zunehmen. Ebenfalls kann es möglich sein, dass in dem dabei betrachteten Zeitabschnitt auch der Massestroms für Ethanol 120 von der zweiten Ausprägung wieder auf die erste Ausprägung hin abnimmt. Die dabei resultierende Konstellation der jeweiligen Ausprägungen des Massestroms für Wasser 110 und des Massestroms für Ethanol 120 entspricht der Konstellation, des ersten Betriebszustands 130, welcher vorstehend beschrieben wurde.

Im weiteren Zeitverlauf kann es möglich sein, dass der Massestroms für Wasser 110 von der ersten Ausprägung auf eine dritte Ausprägung hin zunimmt, wobei die dritte Ausprägung höher sein kann als die erste Ausprägung und als die zweite Ausprägung des Massestroms für Wasser 110. Im gleichen, damit assoziierten Zeitintervall kann es möglich sein, dass der Massestroms für Methanol 120 von der Ausprägung auf eine dritte Ausprägung hin abnimmt, wobei die dritte Ausprägung kleiner ist als die erste Ausprägung und als die zweite Ausprägung.

Das Vorliegen dieser Konstellation von dritter Ausprägung des Massestroms für Wasser 110 und der dritten Ausprägung des Massestroms für Methanol 120 kann mit dem Vorliegen eines dritten Betriebszustands 150 assoziiert werden.

Im weiteren Zeitverlauf kann es möglich sein, dass der Massestrom für Wasser 110 von der dritten Ausprägung wieder auf die erste Ausprägung hin abnimmt. Ferner kann es möglich sein, dass in dem damit assoziierten Zeitintervall auch die dritte Ausprägung des Massestroms für Methanol 120 von der dritten Ausprägung wieder auf die erste Ausprägung hin zunimmt. Die sich dadurch ergebende Konstellation kann erneut mit einem Vorliegen des ersten Betriebszustands 130 assoziiert werden.

Gemäß einigen Aspekten kann es auch möglich sein, einen Betriebszustandsübergang zu triggern und/oder auszuwählen (z.B. basierend auf einer vorbestimmten Auswahl möglicher folgender nächster Betriebszustände).

Der betreffende folgende nächste Betriebszustand kann z.B. basierend auf einer Benutzerschnittstelle bereitgestellt werden. Die Benutzerschnittstelle kann z.B. eine visuelle Repräsentation der Betriebszustände, Übergänge und andere relevante Informationen bereitstellen. Dies kann die Benutzerfreundlichkeit der Überwachung eines Betriebszustands bzw. der Auswahl eines Betriebszustands weiter erhöhen. Die Schnittstelle kann dabei insbesondere intuitiv gestaltet sein, was eine ggf. notwendige Ausbildungszeit für die betreffenden Benutzer minimieren kann und die Effizienz eines Benutzers dadurch erhöhen kann. Ferner kann das Risiko für möglicherweise auftretende Fehler auf diese Weise gemindert werden.

Die Auswahl eines folgenden nächsten Betriebszustands kann z.B. basierend auf einem Benutzerassistenzsystem erfolgen.

In einigen Fällen kann eine Echtzeitüberwachung des industriellen Produktionsprozesses bereitgestellt werden. In einem derartigen Fall kann ein System (z.B. das System wie hierin beschrieben) kontinuierlich den Prozess in Echtzeit überwachen und damit den gegenwärtigen Betriebszustand bestimmen und dessen Verlauf aktuell halten. Dies kann es ermöglichen, dass ein Benutzer stets mit aktuellen Informationen (z.B. einem aktuellen Betriebszustand) über den industriellen Produktionsprozess versorgt werden kann.

Ferner kann ein Übergangsmanagement bereitgestellt werden. Das System kann nicht nur mögliche Übergänge zwischen Zuständen anzeigen, sondern kann auch den tatsächlichen Übergang und ein Ausführen des jeweiligen nachfolgenden, nächsten Betriebszustand initiieren. Das Übergangsmanagement kann es dem Benutzer insbesondere ermöglichen, Übergänge zu triggern und anderen Handlungen vorzunehmen, um den industriellen Produktionsprozess von einem gegenwärtigen Betriebszustand zu einem nächsten folgenden Betriebszustand (bzw. zu einem Zielzustand) überzuführen.

Ferner kann eine Betriebszustandsbestimmung bereitgestellt werden. In einem derartigen Fall kann das System Algorithmen vorsehen (z.B. basierend auf maschinellem Lernen), um einen gegenwärtigen Betriebszustand zu bestimmen. Dies kann manuelle Bestrebungen und möglicherweise dadurch auftretende Fehler minimieren, welche z.B. mit einem Bestimmen eines gegenwärtigen Betriebszustands assoziiert sein können.

In einigen Fällen kann ein Bestimmen eines Betriebszustands nicht (eindeutig) möglich sein. In einem derartigen Fall kann es möglich sein, einen nächsten, passenden (definierten, d.h. einen Betriebszustand, welcher durch das erste neuronale Netz erkannt werden würde) Betriebszustand zu identifizieren oder eine Metrik (z.B. eine Distanzmetrik) zu einem definierten Betriebszustand zu bestimmen. Basierend auf der bestimmten Metrik kann es ermöglicht werden, einen definierten Betriebszustand auszuwählen, welcher erfassten Prozessdaten am ähnlichsten kommt. Die so erhaltene Information kann einen Benutzer dabei unterstützen einen aktuellen Betriebszustand des industriellen Produktionsprozesses zu bestimmen und ggf. zu charakterisieren.

In einigen Fällen kann eine Führungs- bzw. Entscheidungsunterstützung bereitgestellt werden. Auf diese Weise kann einem Benutzer durch ein Hervorheben möglicher Übergänge von einem gegenwärtigen Betriebszustand zu einem Zielbetriebszustand erfolgen. Dies kann dem Benutzer dabei behilflich sein, fundierte Entscheidungen zu treffen und, basierend auf den zur Verfügung stehenden Informationen, einen passenden Zielbetriebszustand zu bestimmen. In einigen Fällen kann es auch möglich sein, dass automatisch (z.B. durch das System und/oder eine geeignete Vorrichtung) ein automatischer Übergang von einem gegenwärtigen Betriebszustand zu einem folgenden nächsten Betriebszustand initiiert wird. In einigen Fällen kann das Initiieren Algorithmus-basiert erfolgen.

In einigen Fällen kann eine Performancevorhersage bereitgestellt werden. Basierend auf ausgeführten Übergängen kann ein erwarteter Zustand des Prozesses vorhergesagt werden. Dies kann es einem Benutzer ermöglich, zielgerichtetere Informationen über ein Systemverhalten eines Systems, welches mit dem industriellen Produktionsprozess assoziiert ist, zu erhalten und entsprechende Entscheidungen zu treffen. Dies kann die allgemeine Effizienz und Performance des Systems verbessern.

In einigen Fällen kann eine Integrations- und Automatisierungstechnologie bereitgestellt werden. Die hierin vorgestellten Aspekte können derart bereitgestellt werden, dass diese nahtlos in eine existierende Steuerungsumgebung eingebettet werden können, wie z.B. ein Distributed Control System (DCS) mittels Protokollen, wie z.B. OPC. Dies kann es dem System ermöglichen mit einem logisch tieferliegenden Kontrollsystem zu interagieren und ggf. notwendige Aktionen zu triggern, welche für einen Wechsel eines Betriebszustands von Bedeutung sein können. In einigen Fällen kann eine direkte Kommunikation (z.B. durch das System und/oder eine entsprechende Vorrichtung (wie hierin beschrieben)) und Aktuatoren bzw. Sensoren ohne Kommunikation über eine Automatisierungstechnologie ermöglicht werden. Dies kann die Funktionalität und Effektivität weiter verbessern und den Benutzern mit einem nahtlosen und effizienten Workflow versorgen.

In einigen Fällen kann das hierin beschriebene System bzw. die hierin beschriebene Vorrichtung konfiguriert sein, Merkmale von verbundenen Automatisierungstechnologien zu manipulieren, wie z.B. einen Schwellenwert für einen Alarm und Ereignisse in dem DCS oder Benutzerrechte in dem DCS, basierend auf einem gegenwärtigen, erkannten Betriebszustand.

Das System kann mit prozeduralen Richtlinien oder verwandten Dokumenten (z.B. Standard-Operationsprozeduren, engl.: *standard operating procedures*) verbunden werden, die mit spezifischen Prozesszuständen assoziiert sind und den Benutzer mit Informationen bzgl. eines spezifischen Betriebszustands versorgen können. Ferner kann es hierdurch ermöglicht werden, weiterführende Metainformationen bzw. Kontextinformationen für einen Benutzer bereitzustellen.

Die Vorteile von Aspekten der vorliegenden Erfindung können z.B. in den nachfolgend beschriebenen Aspekten gesehen werden:
Gesteigerte Effizienz für den Bediener: Die umfassende Unterstützung, die Integration mit dem DCS und die benutzerfreundliche Schnittstelle können den Arbeitsablauf des Bedieners rationalisieren und den Zeit- und Arbeitsaufwand für die verfahrensbasierte Prozessbedienung reduzieren. Dies kann zu einer erhöhten Produktivität und Effizienz führen.

Erhöhte Genauigkeit: Die Zustandserkennung, die Identifizierung des nächstgelegenen Zustands und die Vorhersagefunktionen können Fehler minimieren und die Genauigkeit der Prozessabläufe verbessern. Die Bediener können sich auf die Anweisungen und Informationen des Systems verlassen, wodurch das Fehlerrisiko verringert werden kann und eine zuverlässige Prozessausführung gewährleistet werden kann. Im Falle einer abnormalen Situation, kann das System den Bediener dabei unterstützen, das System in einen normalen/definierten/sicheren Betriebszustand zu bringen.

Verbesserte Entscheidungsfindung: Die Anleitung, die Entscheidungsunterstützung und die Visualisierung möglicher Übergänge können den Bediener befähigen, fundierte Entscheidungen bei der Auswahl von Zielzuständen und der Einleitung von Übergängen zu treffen. Dies kann zu einer besseren Entscheidungsfindung und optimierten Prozesssteuerung beitragen.

Reduzierte Schulungsanforderungen: Die intuitive Benutzeroberfläche und die automatisierten Funktionen des Systems können den Schulungsbedarf für die Bediener reduzieren. Sie können sich schnell mit dem System vertraut machen und effektiv durch zustandsbasierte verfahrenstechnische Abläufe navigieren.

In einigen Fällen, z.B. im Rahmen einer weiteren Ausführungsform, welche mit der ersten Ausführungsform, wie hierin beschrieben, kombiniert werden kann, kann ein Trainieren eines ersten neuronalen Netzes erfolgen, welches trainierte erste neuronale Netz nachfolgend zum Erkennen eines Betriebszustands eines industriellen Produktionsprozesses verwendet werden kann.

Das Trainieren kann ein Definieren zumindest eines Betriebszustands eines industriellen Produktionsprozesses umfassen. Der zumindest eine Betriebszustand kann z.B. mit der Produktion eines Produkts A oder eines initialen Betriebszustands des industriellen Produktionsprozesses assoziiert sein.

Nachfolgend kann zumindest ein Zeitintervall definiert werden (z.B. für jeden des zumindest einen Betriebszustands), welches spezifische Zeitperioden beschreibt, während welcher sich der industrielle Produktionsprozess in einem bestimmten Betriebszustand befindet.

Ferner kann ein zumindest zweistufiger Trainingsprozess angewandt werden. Hierbei kann in einem ersten Schritt ein erstes neuronales Netz trainiert werden (wie hierin beschrieben), um Ausreißer (d.h. Anomalien) oder neue Features, welche nicht in den Trainingsdaten enthalten waren, in dem trainierten ersten neuronalen Netz zu erkennen. Dies kann sich jeweils auf alle verfügbaren Zeitintervalle beziehen. Dies kann z.B. durch Verwenden von Isolation Forest oder One-Class Support Vektor-Maschinen erfolgen. In einigen Beispiel kann das erste neuronale Netz auch zumindest ein Anomalieerkennungsmodell umfassen welches für alle Zeitintervalle der zur Verfügung stehenden Prozessdaten trainiert wurde.

In einem zweiten Schritt kann ein zweites neuronales Netz trainiert werden (wie hierin beschrieben). Das zweite neuronale Netz, kann, wenn es trainiert wurde, dazu verwendet werden, einen definierten Betriebszustand unter Verwenden eines Klassifikationsmodells (z.B. eine Support Vector Machine) einer vordefinierten Klasse von Betriebszuständen zuordnen. Das zweite neuronale Netz kann auch zumindest ein Anomalieerkennungsmodell umfassen, welches auf einen bestimmten Betriebszustand trainiert wurde. In einem derartigen Fall kann z.B. das zumindest eine Anomalieerkennungsmodell für einen bestimmten Betriebszustand, auf welches es trainiert wurde, den Betriebszustand als anomaliefrei ansehen. In allen anderen Fällen kann das trainierte zumindest eine Anomalieerkennungsmodell einen Betriebszustand (auf welchen das Anomalieerkennungsmodell nicht trainiert wurde) als mit einer Anomalie behaftet erkennen.

Das Modell kann unter Verwenden von Daten von ausgewählten Zeitintervallen trainiert wurden, die definierte Zustände des industriellen Produktionsprozesses beschreiben.

Nachfolgend können das erste trainierte neuronale Netz und das zweite trainierte neuronale Netz dazu verwendet werden zumindest einen Betriebszustand des industriellen Produktionsprozesses zu bestimmen. Hierbei kann zunächst vorgesehen sein, mittels des trainierten ersten neuronalen Netzes zu bestimmen, ob erfasste Prozessdaten grundsätzlich einem Betriebszustand zugeordnet werden können (wie hierin beschrieben). Wenn das trainierte erste neuronale Netz feststellt, dass dies nicht möglich ist, gibt dies einen ersten Indikator zurück, welcher indikativ dafür sein kann, dass entweder ein unbekannter Zustand vorliegt oder eine Zuordnung nicht eindeutig möglich ist. Das z.B. dann gegeben sein, wenn das zumindest eine Anomalieerkennungsmodell eine Anomalie erkennt.

Wenn die erfassten Prozessdaten nicht als zu einem unbekannten oder nicht eindeutig bestimmbaren Betriebszustand zugeordnet werden, kann das zweite trainierte neuronale Netz verwendet werden, um einen spezifischen Betriebszustand zu bestimmen, welchem die erfassten Prozessdaten zugeordnet werden können. Wird für das Bestimmen, welchem spezifischen Betriebszustand erfasste Prozessdaten zugeordnet werden können, zumindest ein Anomalieerkennungsmodell verwendet, so ist der "gesuchte" Betriebszustand der Betriebszustand, welcher mit dem Anomalieerkennungsmodell assoziiert ist, welches keine Anomalie für die erfassten Prozessdaten ausgibt. Falls mehrere Anomalieerkennungsmodelle die Prozessdaten als anomaliefrei erkennen, so können die erfassten Prozessdaten nicht eindeutig einem Betriebszustand zugeordnet werden.

In einer alternativen Ausführungsform, welche mit der ersten und/oder zweiten Ausführungsform (wie hierin beschrieben) kombiniert werden kann, kann das Erkennen des zumindest einen Betriebszustands als ein Soft Sensor Modell verstanden werden. Der Zielwert kann ein definierter Betriebszustand sein. Der Soft Sensor kann den Betriebszustand und die Unsicherheit der Vorhersage trainieren.

Während der Laufzeit, kann der Soft Sensor den Betriebszustand vorhersagen. Wenn sich der industrielle Produktionsprozess in einem unbekannten Zustand befindet, können die Unsicherheiten ein Maß dafür sein, in wie weit/wie nahe der eigentliche durch die Prozessdaten ausgedrückte Zustand einem bekannten Betriebszustand ist.

Insbesondere können die hierin vorgestellten Aspekte einen zustandsbasierten Prozessbetrieb gemäß den Normen ISA-88 und ISA-106 ermöglichen und so Kompatibilität und die Einhaltung von Branchenvorschriften ermöglichen. Dies kann den Benutzern Sicherheit und Gewissheit während des industriellen Produktionsprozesses ermöglichen.

Fig. 2 zeigt ein Ablaufdiagramm eines exemplarischen computer-implementierten Verfahrens 200 zum Trainieren eines ersten neuronalen Netzes zum Erkennen eines Betriebszustands eines industriellen Produktionsprozesses.

In Schritt 210 erfolgt ein Definieren des zumindest einen Betriebszustands.

In Schritt 220 erfolgt ein Bestimmen zumindest eines Zeitintervalls, in welchem sich der industrielle Produktionsprozess in dem zu erkennenden Betriebszustand befindet.

In Schritt 230 erfolgt ein Bereitstellen einer ersten Zuordnung von Prozessdaten, welche mit dem Produktionsprozess assoziiert sind, zu dem zu erkennenden Betriebszustand, welcher während des Zeitintervalls aktiv ist.

In Schritt 240 erfolgt ein Trainieren, basierend auf der bereitgestellten ersten Zuordnung, eines ersten neuronalen Netzes, wobei das erste neuronale Netz zumindest ein Anomalieerkennungsmodell umfasst und wobei das neuronale Netz trainiert wird, basierend auf dem zumindest einen Anomalieerkennungsmodell eine Zuordnung von Prozessdaten, welche mit dem Produktionsprozess assoziiert sind, zu einem Betriebszustand, welcher zu einem bestimmten Zeitintervall aktiv ist, durchzuführen.

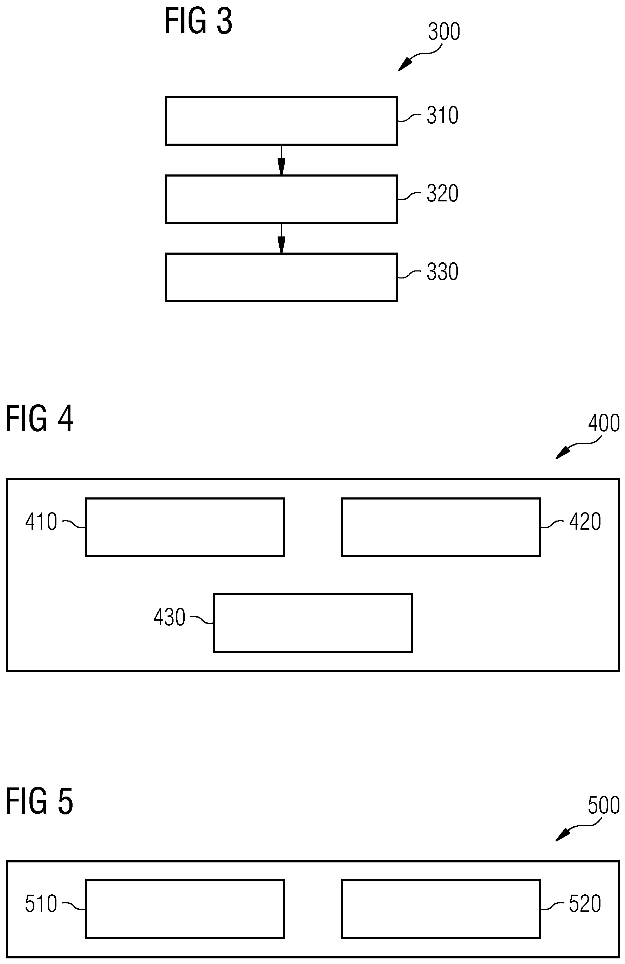

Fig. 3 zeigt ein exemplarisches computer-implementiertes Verfahren 300 zum Bestimmen eines Betriebszustands eines industriellen Produktionsprozesses.

In Schritt 310 erfolgt ein Bereitstellen von Prozessdaten, welche mit dem Produktionsprozess assoziiert sind, an zumindest ein erstes trainiertes neuronales Netz, welches wie hierin beschrieben trainiert wurde, wobei das erste neuronale Netz zumindest ein Anomalieerkennungsmodell umfasst und die Prozessdaten an ein jedes des zumindest einen Anomalieerkennungsmodells bereitgestellt werden.

In Schritt 320 erfolgt ein Bestimmen, zumindest teilweise basierend auf dem ersten trainierten neuronalen Netz, ob die Prozessdaten einem vordefinierten Betriebszustand zugeordnet werden können.

In Schritt 330 erfolgt ein Bereitstellen eines ersten Indikators, welcher indikativ dafür ist, ob die Prozessdaten einem Betriebszustand zugeordnet werden können.

Fig. 4 zeigt eine exemplarische computer-implementierte Vorrichtung 400 zum Bestimmen eines Betriebszustands eines industriellen Produktionsprozesses. Die computer-implementierte Vorrichtung 400 umfasst eine erste Bereitstellungseinheit 410, eine Bestimmungseinheit 420 sowie eine zweite Bereitstellungseinheit 430.

Die erste Bereitstellungseinheit 410 ist konfiguriert zum Bereitstellen von Prozessdaten, welche mit dem Produktionsprozess assoziiert sind, an zumindest ein erstes trainiertes neuronales Netz, welches wie hierin beschrieben trainiert wurde, wobei das erste neuronale Netz zumindest ein Anomalieerkennungsmodell umfasst und die Prozessdaten an ein jedes des zumindest einen Anomalieerkennungsmodells bereitgestellt werden.

Die Bestimmungseinheit 420 ist konfiguriert zum Bestimmen, zumindest teilweise basierend auf dem ersten trainierten neuronalen Netz, ob die Prozessdaten einem vordefinierten Betriebszustand zugeordnet werden können.

Die zweite Bereitstellungseinheit 430 ist konfiguriert zum Bereitstellen eines ersten Indikators, welcher indikativ dafür ist, ob die Prozessdaten einem Betriebszustand zugeordnet werden können.

Fig. 5 zeigt ein exemplarisches System 500 zum Bestimmen eines Betriebszustands eines industriellen Produktionsprozesses. Das System umfasst eine computer-implementierte Vorrichtung 510 sowie ein Computerprogrammprodukt 520.

Die computer-implementierte Vorrichtung 510 kann bereitgestellt werden wie die computer-implementierte Vorrichtung wie herein beschrieben.

Das Computerprogrammprodukt 520 kann bereitgestellt werden wie hierin beschrieben.

Obwohl die vorliegende Erfindung anhand von Ausführungsbeispielen beschrieben wurde, ist sie vielfältig modifizierbar.

Bei den genannten neuronalen Netzen handelt es sich insbesondere um künstliche neuronale Netze, die computerimplementiert sind.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Diagramm
- 110: Massestrom für Wasser
- 120: Massestrom für Methanol
- 130: erster Betriebszustand
- 140: zweiter Betriebszustand
- 150: dritter Betriebszustand
- 200: computer-implementiertes Verfahren
- 210: Schritt
- 220: Schritt
- 230: Schritt
- 240: Schritt
- 300: computer-implementiertes Verfahren
- 310: Schritt
- 320: Schritt
- 330: Schritt
- 400: computer-implementierte Vorrichtung
- 410: erste Bereitstellungseinheit
- 420: Bestimmungseinheit
- 430: zweite Bereitstellungseinheit
- 500: System
- 510: computer-implementierte Vorrichtung
- 520: Computerprogrammprodukt

## Patentansprüche

1. Computer-implementierte Vorrichtung zum Trainieren eines ersten neuronalen Netzes zum Erkennen eines Betriebszustands eines industriellen Produktionsprozesses, umfassend:
- eine Definitionseinheit zum Definieren zumindest eines Betriebszustands;
- eine Bestimmungseinheit zum Bestimmen zumindest eines Zeitintervalls, in welchem sich der industrielle Produktionsprozess in dem zu erkennenden Betriebszustand befindet;
- eine Bereitstellungseinheit zum Bereitstellen einer ersten Zuordnung von Prozessdaten, welche mit dem Produktionsprozess assoziiert sind, zu dem zu erkennenden Betriebszustand, welcher während des Zeitintervalls aktiv ist; und
- eine Trainingseinheit zum Trainieren, basierend auf der bereitgestellten ersten Zuordnung, des ersten neuronalen Netzes, wobei das erste neuronale Netz zumindest ein Anomalieerkennungsmodell umfasst und wobei das erste neuronale Netz trainiert wird, basierend auf dem zumindest einen Anomalieerkennungsmodell eine Zuordnung von Prozessdaten, welche mit dem Produktionsprozess assoziiert sind, zu einem Betriebszustand, welcher zu einem bestimmten Zeitintervall aktiv ist, durchzuführen.

2. Computer-implementierte Vorrichtung nach Anspruch 1, wobei das erste neuronale Netz für jeden zu erkennenden Betriebszustand jeweils ein Anomalieerkennungsmodell umfasst und jeder zu erkennende Betriebszustand jeweils einem Anomalieerkennungsmodell zugeordnet ist, welches den zu erkennenden Betriebszustand als anomaliefrei erkennt, und wobei die Trainingseinheit konfiguriert ist, ein jedes Anomalieerkennungsmodell derart zu trainieren, dass jedes Anomalieerkennungsmodell jeweils den ihm zugeordneten Betriebszustand als anomaliefrei erkennt und andere, von dem zugeordneten Betriebszustand verschiedene Betriebszustände als mit einer Anomalie behaftet erkennt.

3. Computer-implementierte Vorrichtung nach Anspruch 1 oder 2, wobei die Bereitstellungseinheit dazu ausgebildet ist, an ein zweites neuronales Netz, welches einen Klassifikator umfasst, eine zweite Zuordnung von Prozessdaten zu jeweils einem Betriebszustand bereitzustellen, und wobei die Trainingseinheit ferner konfiguriert ist, basierend auf der bereitgestellten zweiten Zuordnung das zweite neuronale Netz derart zu trainieren, dass das zweite neuronale Netz Prozessdaten einem Betriebszustand zuordnet.

4. Computer-implementierte Vorrichtung nach einem der Ansprüche 1 bis 3, wobei das zumindest eine Anomalieerkennungsmodell einen Isolation Forest und/oder eine One-Class Support Vector Machine umfasst.

5. Computerlesbares Speichermedium und/oder Computerprogrammprodukt, umfassend ein trainiertes erstes neuronales Netz zum Erkennen eines Betriebszustands eines industriellen Produktionsprozesses, wobei das trainierte erste neuronale Netz zumindest ein Anomalieerkennungsmodell umfasst und derart trainiert ist, basierend auf dem zumindest einen Anomalieerkennungsmodell eine Zuordnung von Prozessdaten, welche mit dem Produktionsprozess assoziiert sind, zu einem Betriebszustand, welcher zu einem bestimmten Zeitintervall aktiv ist, durchzuführen.

6. Computerlesbares Speichermedium und/oder Computerprogrammprodukt nach Anspruch 5, wobei das trainierte erste neuronale Netz für jeden zu erkennenden Betriebszustand jeweils ein Anomalieerkennungsmodell umfasst, welches den ihm zugeordneten Betriebszustand als anomaliefrei und andere, von dem zugeordneten Betriebszustand verschiedene Betriebszustände als mit einer Anomalie behaftet erkennt, und/oder ferner umfassend ein trainiertes zweites neuronales Netz, welches einen Klassifikator umfasst und derart trainiert ist, Prozessdaten einem Betriebszustand zuzuordnen.

7. Computer-implementiertes Verfahren zum Betreiben eines industriellen Produktionsprozesses, umfassend:
a) Bereitstellen von Prozessdaten, welche mit dem Produktionsprozess assoziiert sind, an zumindest ein erstes trainiertes neuronales Netz, welches zumindest ein Anomalieerkennungsmodell umfasst, wobei die Prozessdaten an ein jedes des zumindest einen Anomalieerkennungsmodells bereitgestellt werden;
b) Bestimmen, zumindest teilweise basierend auf dem ersten trainierten neuronalen Netz, eines gegenwärtigen Betriebszustands des industriellen Produktionsprozesses;
c) Bestimmen zumindest eines potentiell auf den gegenwärtigen Betriebszustand folgenden nächsten Betriebszustands aus einer vorbestimmten Auswahl möglicher folgender nächster Betriebszustände; und
d) Automatisches Initiieren eines Übergangs von dem gegenwärtigen Betriebszustand zu dem folgenden nächsten Betriebszustand sowie Ausführen des folgenden nächsten Betriebszustands, wobei das Initiieren basierend auf einem Algorithmus erfolgt.

8. Computer-implementiertes Verfahren nach Anspruch 7, wobei das Bestimmen des gegenwärtigen Betriebszustands ein Bereitstellen der Prozessdaten an ein zweites trainiertes neuronales Netz, welches einen Klassifikator umfasst, und ein Bestimmen, durch das zweite trainierte neuronale Netz, einer Zuordnung der Prozessdaten zu einem Betriebszustand umfasst.

9. Computer-implementiertes Verfahren nach Anspruch 7 oder 8, wobei mehr als ein Anomalieerkennungsmodell bereitgestellt wird, ferner umfassend:
i) Bestimmen, dass die Prozessdaten keinem der Betriebszustände zugeordnet werden können, wenn zumindest zwei Anomalieerkennungsmodelle die Prozessdaten als anomaliefrei erkennen; und
ii) Durchführen eines Nachtrainierens von zumindest einem des mehr als einen Anomalieerkennungsmodells.

10. Computer-implementiertes Verfahren nach einem der Ansprüche 7 bis 9, ferner umfassend, wenn ein Bestimmen eines Betriebszustands nicht eindeutig möglich ist:
i) Bestimmen einer Distanzmetrik zu zumindest einem definierten Betriebszustand, welcher durch das erste trainierte neuronale Netz erkannt werden würde; und
ii) Auswählen, basierend auf der bestimmten Distanzmetrik, eines definierten Betriebszustands, welcher erfassten Prozessdaten am ähnlichsten kommt.

11. Computer-implementiertes Verfahren nach Anspruch 10, wobei die erfassten Prozessdaten in einem zumindest zweidimensionalen Koordinatensystem aufgetragen werden, wobei sich Punktwolken aus den Prozessdaten bestimmen lassen, und wobei das Bestimmen der Distanzmetrik ein Bestimmen einer metrischen Distanz zwischen Schwerpunkten der erhaltenen Punktwolken umfasst.

12. Computer-implementiertes Verfahren nach einem der Ansprüche 7 bis 11, ferner umfassend:
i) Analysieren von historisch ausgeführten Übergängen zwischen zwei aufeinanderfolgenden Betriebszuständen;
ii) Bestimmen, zumindest teilweise basierend auf dem Analysieren, einer Vorhersage eines zukünftig zu erwartenden Übergangs von dem gegenwärtigen Betriebszustand zu einem potentiell folgenden nächsten Betriebszustand; und
iii) Vorhersagen eines erwarteten Zustands des industriellen Produktionsprozesses basierend auf ausgeführten Übergängen.

13. Computer-implementiertes Verfahren nach einem der Ansprüche 7 bis 12, wobei das Verfahren in eine existierende Steuerungsumgebung, welche ein Distributed Control System, DCS, umfasst, mittels eines Protokolls, insbesondere OPC, eingebettet ist, und wobei das automatische Initiieren des Übergangs ein Triggern zumindest einer Aktion in einem logisch tieferliegenden Kontrollsystem umfasst, welche für einen Wechsel des Betriebszustands von Bedeutung ist.

14. Computer-implementiertes Verfahren nach Anspruch 13, ferner umfassend ein Manipulieren eines Merkmals einer verbundenen Automatisierungstechnologie, insbesondere eines Schwellenwerts für einen Alarm in dem DCS oder eines Benutzerrechts in dem DCS, basierend auf dem bestimmten gegenwärtigen Betriebszustand.

15. Computerprogrammprodukt, umfassend Befehle, die bei der Ausführung des Programms durch einen Computer diesen veranlassen, die Schritte des computer-implementierten Verfahrens nach einem der Ansprüche 7 bis 14 auszuführen.
